# EUROPEAN PATENT APPLICATION

(11) **EP 4 080 756 A1**
(43) Date of publication of application: **26.10.2022**
(21) Application number: 20845397.7
(22) Date of filing: 16.12.2020
(51) Int. Cl.: H02S 20/32, F24S 50/20, H02S 20/20

(54) **SELF-SUPPORTING FRAME FOR PHOTOVOLTAIC PANELS**

(30) Priority: 18.12.2019 ES 201932085 U
(71) Applicant: Soltec Innovations, S.L., 30500 Molina de Segura (ES)
(72) Inventor: TORRANO CARRILLO, Francisco Javier, 30500 Molina de Segura (ES); TERUEL HERNÁNDEZ, José Alfonso, 30007 Zarandona (ES); CARPIO OBRE, Francisco Javier, 46870 Ontinyent (ES); CORDERO ALVAREZ, Miguel, 30500 Molina de Segura (ES); MIRA PÉREZ, Jorge, 30500 Molina de Segura (ES)
(74) Representative: Isern Patentes y Marcas S.L.
(86) International application number: PCT/ES2020/070796
(87) International publication number: WO 2021/123479

(57) **Abstract**

The present invention relates to a frame (1) which comprises: support structure (2) made up of profiles, for supporting photovoltaic panels, and which comprises two lateral sides (6); and at least one reinforcement element (3), mounted in correspondence with the corresponding lateral side (6) thereof for supporting additional loads to the weight of the cells. It further includes connection means (4) for connecting to a torsion tube (5). In one exemplary embodiment, the reinforcement element (3) is a solid gusset, from which the lateral sides (6) are suspended, as well as the connection means (4) include upper (28) and lower clamps (29) with a shape adapted to the torsion tube (5) to avoid relative rotation; and which are tightened against the torsion tube by means of bolts (30) which pass through the clamps (28, 29) and corresponding nuts (31), the upper clamp (28) comprising lateral grooves (33) to fit the reinforcement elements (3).

## Description

### Technical field

The present invention can be included within the field of solar energy, particularly of photovoltaic solar energy installations. More specifically, the object of the invention relates to a self-supporting frame for photovoltaic panels.

### Background

In the technology related to harnessing photovoltaic solar energy, there are various considerations to take into account when optimizing performance and costs of photovoltaic cells, photovoltaic panels and solar tracker structures. One of the considerations is related to the material of the semiconductor cells used in the construction of the panels; another consideration relates to the type of doping used for building the cells; another consideration is related to the use of optimization technologies, such as: cut cells or PERC (PERL, PERC); the feasibility of using bifacial cells should also be contemplated, as well as taking into account the dimensions of the cells and the capacity, in number of cells, of the panels.

However, an increase in the dimensions of the cells and the capacity of the panels necessarily implies an increase in the dimensions of the panels themselves and, therefore, an increase in the structural requirements of the panel structure and the connection thereof, where appropriate, to the solar tracker.

### Summarized description of the invention

The present invention exhibits a frame for photovoltaic panels that is configured in such a way that it is self-supporting, that is, it simultaneously provides support for the cells that make up the photovoltaic panel, as well as it incorporates additional reinforcement elements that enable it to resist loads in addition to the weight of the panel itself, such as wind loads.

The fundamental advantage of the frame of the invention is that it exhibits an improved resistive capacity that enables the manufacture of photovoltaic solar panels that are self-supporting, that is, they do not require an additional support structure to the panel itself for fulfilling the necessary resistance requirements.

Particularly, the advantages are described in detail below:
- The frame contributes substantially to the structural resistance of the panel and, in the case of installations with a tracker, of the tracker. Currently, the contribution of the frame is not taken into account. By means of the present invention, which considers both the structural contribution of the frame and the types of attachments of the panel to the torsion tube, a cost reduction is enabled while maintaining the resistance level.
- Current installations with bifacial panels are designed with a torsion tube height of approximately 2 m, which is an excessive height that makes it difficult for operators to assemble the modules. The use of the self-supporting frame of the invention enables the mounting height to be reduced, making the mounting tasks easier for the operators.
- Likewise, such a high mounting height affects the assembly speed. According to the present invention, one same element exhibits resistive, support and connection functions, thereby increasing the assembly speed, as it is not necessary to separately assemble different elements that fulfil said tasks separately.
- The use of the frame of the invention enables the mounting height of the panels to be reduced by up to 100 mm, thereby reducing the height of the load center and, therefore, reducing the stresses on the structure, as the ratio between the height of the load center and the height of the mass center of the installation is improved.

### Brief description of the figures

The foregoing and other advantages and features will be better understood based on the following detailed description of several exemplary embodiments in reference to the attached drawings, which must be interpreted which must be taken by way of illustration and not limitation, wherein:
Figure 1 shows one exemplary embodiment of the frame of the invention, with two reinforcement elements.
Figure 2 shows another exemplary embodiment of the frame of the invention, with a single reinforcement element, connected in a non-detachable articulated manner.
Figure 3 shows one exemplary embodiment of the frame of the invention with two reinforcement elements connected in a detachable non-articulated manner.
Figure 4 shows another exemplary embodiment of the frame of the invention with two reinforcement elements, which comprise a longitudinal section and an oblique section.
Figure 5 shows one exemplary embodiment of the frame of the invention wherein each connection element comprises a connection body for being fixed to the torsion tube by means of a hook and a rod that passes through holes.
Figures 6A, 6B, 6C and 7A, 7B, 7C show two exemplary embodiments of the frame of the invention wherein the connection element comprises an arched portion for clasping the torsion tube.
Figures 8A and 8B show one exemplary embodiment of the frame of the invention wherein a groove made in the torsion tube is included for supporting the reinforcement element.
Figure 9 shows one exemplary embodiment wherein the frame is intended for supporting the panel in a fixed structure, alternatively to the frame shown in Figures 1-8, which is intended for supporting the panels in a torsion tube of a solar tracker.
Figure 10 shows an alternative exemplary embodiment of the reinforcement elements and the connection means, wherein, particularly, the connection means comprise clamps intended for being superiorly and inferiorly fixed to the torsion tube by means of bolts and nuts.
Figure 11 shows a detail of a preferred embodiment compatible with at least the embodiment of Figure 10, wherein the reinforcement element is solid and the corresponding lateral side of the support structure is suspended from the reinforcement element by means of C-shaped or inverted C-shaped support plates, fixed to both sides of the reinforcement elements, as well as lateral profiles, mounted on the lateral sides of the support structure, and which are supported fitted in the support plates.

### Detailed description of an exemplary embodiment

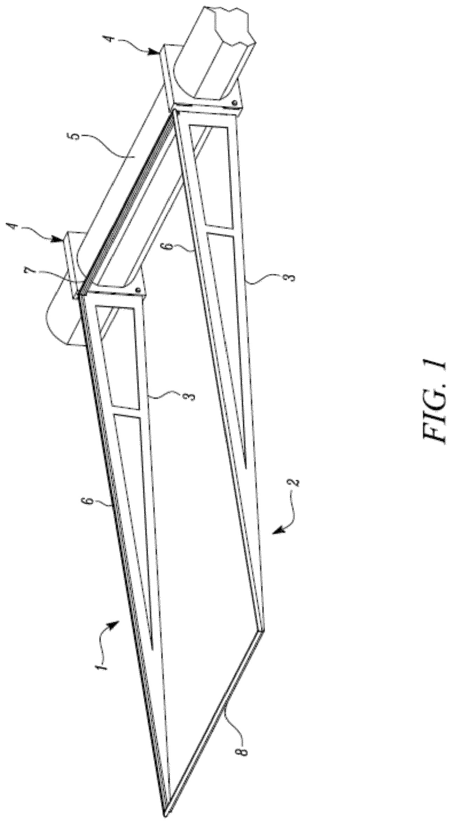

A detailed description of a preferred exemplary embodiment of a self-supporting frame (1) for photovoltaic panels according to the present invention is provided below, with the aid of the aforementioned attached figures 1-11.

The frame (1) of the invention comprises: a quadrangular, generally rectangular support structure (2), made up of profiles assembled together; and it further includes at least one reinforcement element (3) for increasing the resistance of the support structure (2).

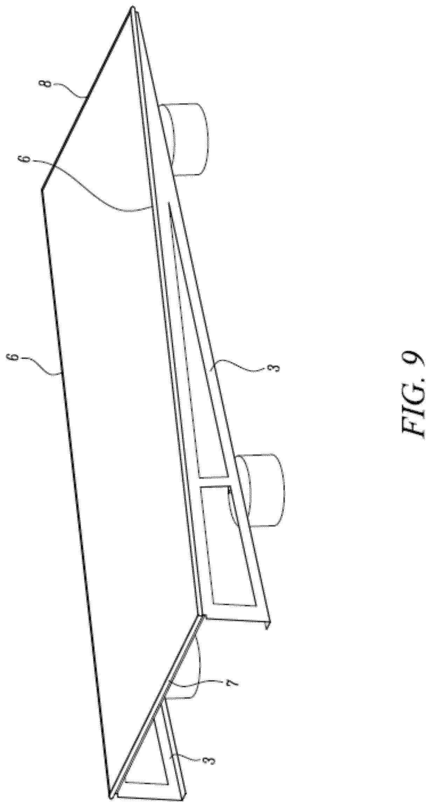

According to Figures 1-8, the frame (1) is intended for supporting the panels on a torsion tube (5) of a solar tracker, while Figure 9 illustrates the fixing of the panels on a fixed structure, which can be installed on floors, roofs, rooftops, etc.

The support structure (2) comprises four sides (6, 7, 8): two lateral sides (6), perpendicular to the torsion tube (5), intended for being arranged adjacent to other panels; and two end sides (7, 8), which in turn include a connection end side (7), closer to the torsion tube (5), for being connected to said torsion tube (5), and a free end side (8), opposite the connection end side (7). The present invention only considers including reinforcement elements (3) in correspondence with the lateral sides (6).

The support structure (2) is dimensioned to the minimum necessary for supporting only the weight of the photovoltaic cells, without taking into account considerations regarding the resistance of the frame (1) to stresses such as wind loads. The reinforcement element or elements (3) are connected to the corresponding lateral sides (6) thereof, and/or to the torsion tube (5), for providing the frame (1) with resistance to stresses, which the support structure (2) alone cannot provide.

Different embodiments of the frame (1) and the reinforcement elements (3) are described in more detail below.

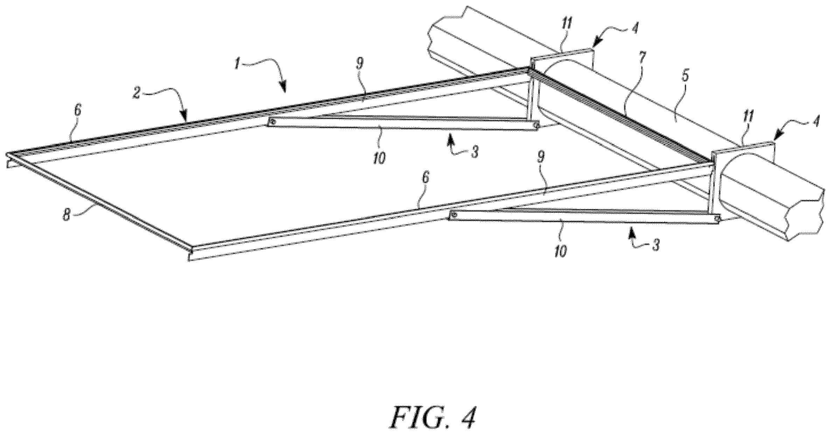

The support structure (2) exhibits a rectangular shape, and is made up of connected profiles, as explained in previous paragraphs. Additionally, as indicated above, at least one reinforcement element (3) is included which, in most of the examples represented in the figures, see Figures 1-3 and 5-8, is configured by way of a triangular gusset. The reinforcement element (3), for example, in the gusset embodiment thereof, is generally a single part. Figure 4 shows an alternative configuration, as will be explained later.

The invention envisages both the inclusion of two reinforcement elements (3), one on each of the lateral sides (6), for jointly withstanding the stresses of each panel, or alternatively the inclusion of only one reinforcement element (3), located on only one of the two lateral sides (6), for withstanding part of the stresses of its own panel and part of the stresses of the adjacent panel.

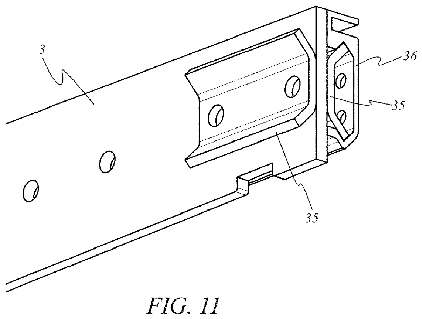

One alternative embodiment, illustrated by means of Figure 11, shows that the reinforcement elements (3) are configured by way of gussets, which can have a rectangular or triangular shape, and which are solid, to be able to support greater external loads. The frame (1) is configured so that the lateral sides (6) are suspended from the reinforcement elements (3), for transferring, to the reinforcement elements (3), the stresses in addition to the weight of the solar panels. Preferably, hooks (35) are arranged, fixed to both sides of the reinforcement elements (3), along said reinforcement elements (3); as well as lateral profiles (36), mounted on the corresponding lateral side (6) thereof, and configured so that they fit into the hooks (35) to be suspended from said hooks (35) in a slidable manner. Preferably, the hooks (35) are located opposite to both sides of the reinforcement element (3), in addition to being attached both to each other and to the reinforcement element (3), for example, by means of rivets or screws. In the example illustrated in Figure 11, the hooks (35) are configured by way of C-shaped or inverted C-shaped lateral plates, as well as the lateral profiles (36) being configured to fit, with form closure, into the hooks (35). As can be seen in Figure 11, the lateral profiles (36) can include: an upper cross section that develops in an enveloping shape in a direction (same or opposite) with respect to the clockwise direction, and a lower cross section that develops with an enveloping shape in the opposite direction to that of the upper cross section, creating a C-shaped or inverted C-shaped (" 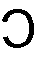 ") cavity, which enables the lateral side (6) - lateral profile (36) assembly to slide suspended from the hooks (35). In Figure 11 hooks (35) are represented on both sides of the reinforcement element (35), although, for clarity, only the lateral profile (36) of the right side of the figure has been represented.

The reinforcement element or elements (3) can be connected to the support structure (2) or to the torsion tube (5), (by means of, for example, the connection means (4)), always in correspondence with the respective lateral sides (6) thereof, in various ways. Particularly, they can be detachable or non-detachable from said lateral sides (6). In either case, they can further be pivotable or fixed, with respect to the lateral sides (6), see, for example, Figures 1-4, as explained below.

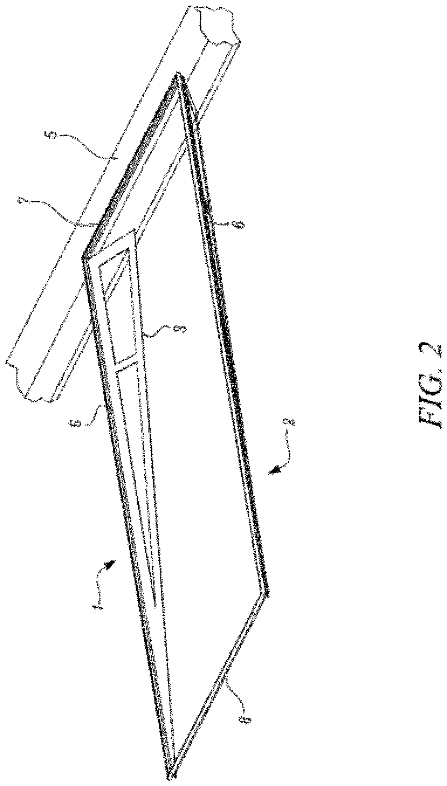

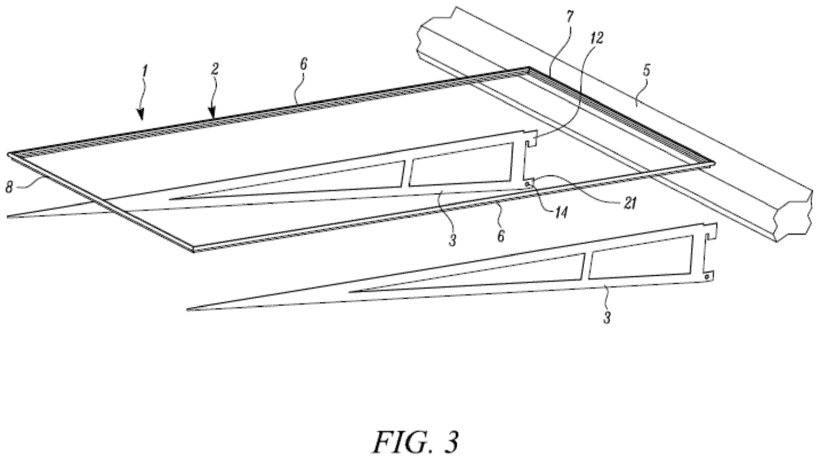

Figure 1 illustrates a general example with two reinforcement elements (3). Figure 2, for its part, shows an example that only includes one reinforcement element (3), although it could be two, connected to the lateral side (6) thereof of the support structure (2) in a non-detachable articulated manner. As for Figure 3, it shows an example with two reinforcement elements (3), although it could be only one, which are connected in a detachable and non-articulated manner. Likewise, Figure 4 illustrates an alternative exemplary embodiment with two reinforcement elements (3), although it could be one, which comprise a longitudinal section (9), mounted along the corresponding lateral side (6), and an oblique section (10), articulated with the longitudinal section (9), either at an intermediate point of the longitudinal section (9), as illustrated in Figure 4 or, alternatively, at an end point of said longitudinal section (9). An additional reinforcement (not represented) with a triangular shape can be included between the longitudinal section (9) and the oblique section (10). The fact that the oblique section (10) is articulated facilitates the storage and transport of the reinforcement elements (3) before being assembled.

Preferably, the frame (1) can further include connection elements (4) for connecting the support structure (2), together with the reinforcement elements (3), to the aforementioned torsion tube (5), belonging to the solar tracker intended for providing solar tracking to the photovoltaic panel.

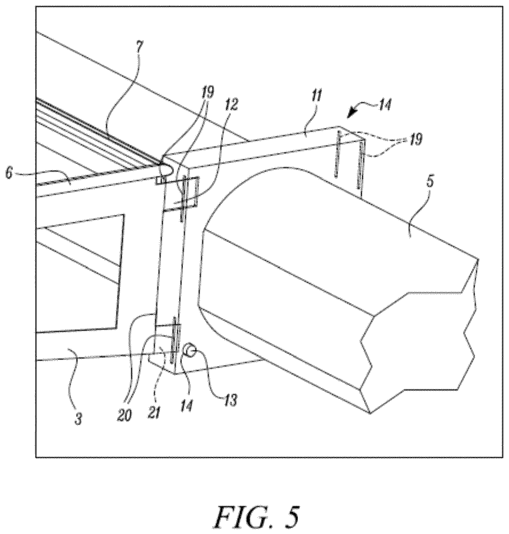

In this sense, Figures 5-8 and 10 illustrate various embodiments of the connection elements (4), which are applicable, except for manifest incompatibility, to all the configurations of reinforcement elements (3) described in the previous paragraphs.

Particularly, Figure 5 shows an exemplary embodiment wherein each connection element (4) comprises a connection body (11), wherein the torsion tube (5) is housed, for example, by snap fit, passing through the connection body (11). The connection body (11) has one or more upper grooves (19) and one or more lower grooves (20). Correspondingly, the reinforcement element (3) exhibits an upper projection (12) in the shape of a hook, to be housed in the corresponding upper groove (19) thereof, providing an initial support of the reinforcement element (3) in the connection body (11). Likewise, the reinforcement element (3) includes a lower projection (21), to be connected in the lower groove (20), by means of a through element (13) such as a pin, screw, rivet or similar, through a corresponding perforation (14).

According to a preferred exemplary embodiment, each one of the connection bodies (11) may include only one upper groove (19) and one lower groove (20), for fixing the reinforcement element (3) of one of the lateral sides (6) of a single panel. Alternatively, the connection bodies (11) may include two upper grooves (19) and two lower grooves (20), for fixing the reinforcement element (3) of one of the lateral sides (6) of two adjacent panels. Likewise, according to either of the two examples, the connection body (11) may further include one or two upper grooves (19) and one or two additional lower grooves (20), on the opposite side of the connection body (11) to enable connection with opposite panels located on the other side of the torsion tube (5). Particularly, the torsion tube (5) normally exhibits a north-south orientation in plan view, wherein the panels can be mounted both on the east side and on the west side of said torsion tube (5). The additional upper (19) and lower grooves (20) serve to connect facing panels mounted on the east and west side of the torsion tube (5) in the same connection body (11).

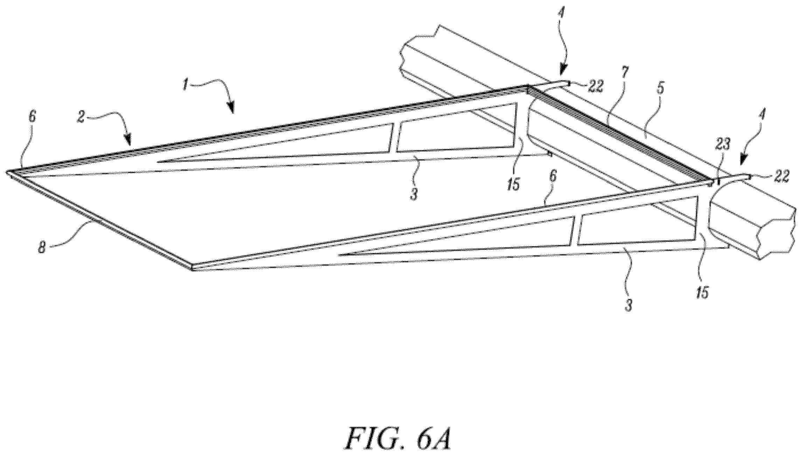

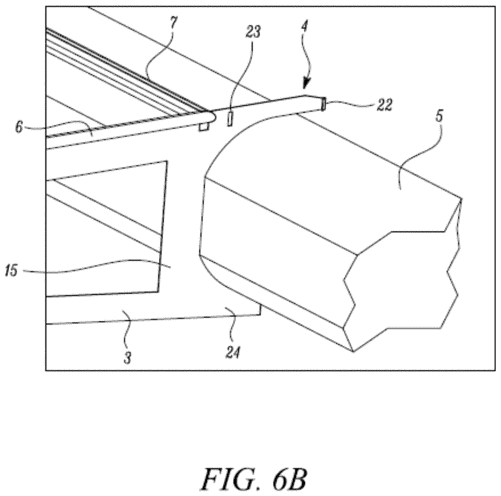

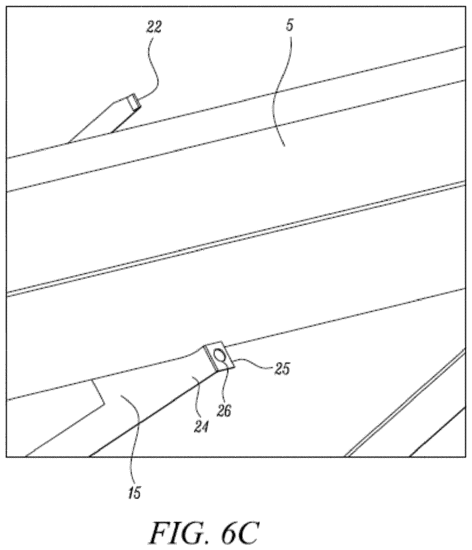

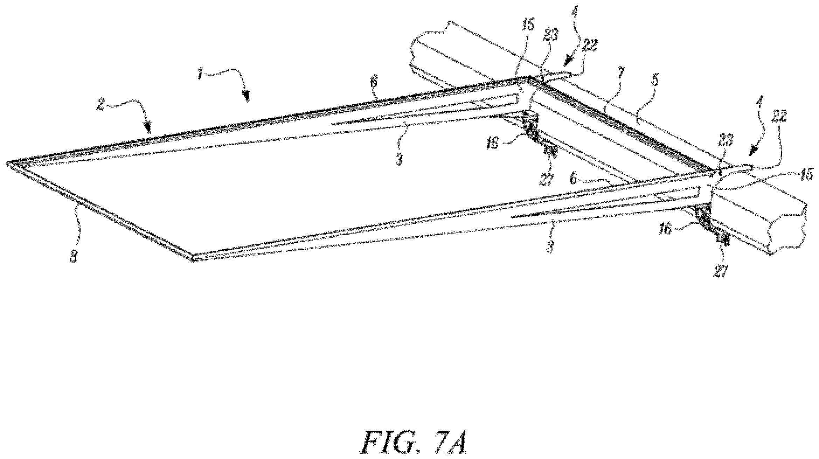

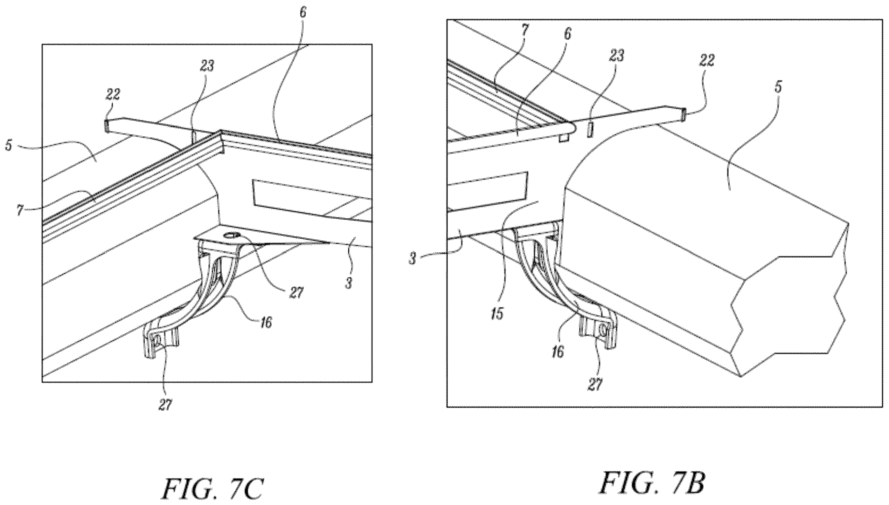

As for Figures 6A to 6C and 7A to 7C, they show exemplary embodiments wherein the connection element (4) comprises an arched portion (15) integrated in the reinforcement element (3) itself, which partially clasps the torsion tube (5), and with an upper section wherein a hook (22) and a groove (23) are located for engaging the hook (22) of an arched portion (15) in the groove (23) of an arched portion (15) of a facing panel.

Specifically, according to a preferred exemplary embodiment, illustrated in Figures 6A to 6C, the arched portion (15) further includes a lower section (24), which extends until it reaches a vertical median plane of the torsion tube (5), and which in turn includes a folded plate (25) provided with a hole (26) to be fixed, for example screwed, to a facing arched portion (15). For its part, according to the exemplary embodiment of Figures 7A to 7C, a complementary portion (16), also arched and with a more robust construction, is used instead of the lower section (24), to press against the torsion tube (5), and which exhibits perforations (27) at the ends thereof to be superiorly screwed to the arched portion (15) and inferiorly to another complementary portion (16) of an opposite panel, to surround and tighten the torsion tube (5).

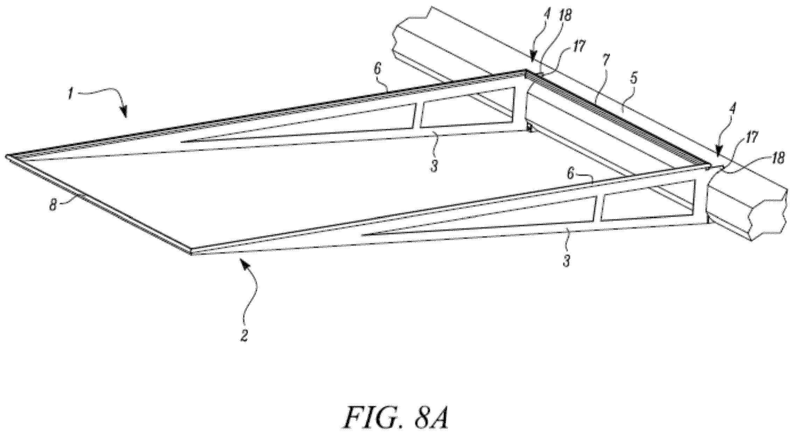

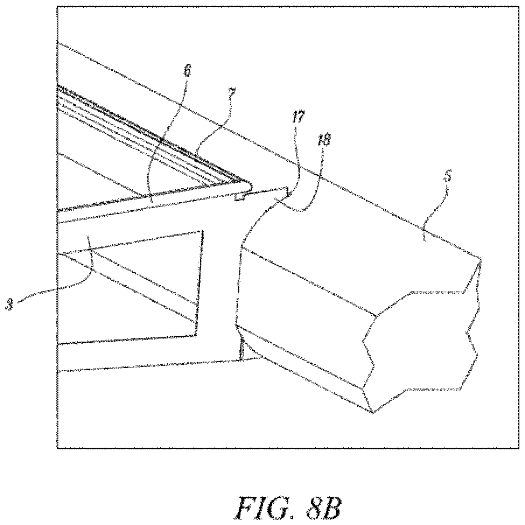

According to figures 8A and 8B, an exemplary embodiment is illustrated wherein the connection element (4) comprises projections (18) projecting from the reinforcement element (3) intended for engaging corresponding perimeter grooves (17) made in the torsion tube (5). Likewise, the lower portion of the reinforcement element (3) is configured to be fixed, for example screwed, to the torsion tube (5), either directly or through an auxiliary part (not shown) fixed to the torsion tube (5).

With regard to the materials that can be used, aluminium stands out as the most preferred, followed by steel, especially surface-coated steel. Aluminium does not require surface treatment, in addition to exhibiting a lighter resistance in relation to weight. However, steel exhibits a greater resistance in absolute terms, in addition to providing galvanic protection, by means of homogeneity of materials, as the torsion tube (5) is generally made of steel. Furthermore, the zinc-aluminium-magnesium coating stands out among the surface coatings applicable to steel with a protective nature, to provide protection to the structure throughout the useful life of the structure, wherein magnesium contributes to the creation of a stable film on the surface of the steel, which prevents corrosion 5-10 times better than conventional hot-dip galvanized steel.

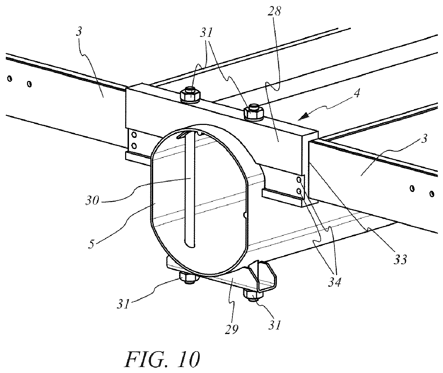

Figure 10, which is compatible with at least the embodiment described above from Figure 11, describes alternative connection means (4), which enable relative rotation between the reinforcement elements (3) and the torsion tube (5) to be avoided. For this, the connection means (4) comprise two clamps (28, 29), with an internal shape adapted to the external shape of the torsion tube (5), and at least one bolt (30), preferably two bolts (30), with the corresponding nuts (31) thereof. The clamps (28, 29) comprise an upper clamp (28) superiorly mounted on the torsion tube (5), and a lower clamp (29), inferiorly mounted on the torsion tube (5), and opposite the upper clamp (28). Both the clamps (28, 29) and the torsion tube (5) comprise corresponding holes (not shown), passed through by the bolts (30), which are tightened at the ends by means of the nuts (31), to press the clamps (28, 29) against the torsion tube (5). The upper clamp (28), in turn, comprises lateral grooves (33) wherein the reinforcement elements (3) fit. Likewise, the reinforcement elements (3) are fixed to the upper clamp (28), by means of fixings (34), which can be any of the conventional type, such as rivets, welding, nut-screw, self-tapping, etc.

Regarding the solution for a fixed structure, represented in Figure 9, it exhibits the advantage, as indicated above, that the frame (1) itself enables it to withstand additional loads, for example wind loads, with the consequent saving in material and installation time and labour, as it is no longer necessary to reinforce the panel. This provides a competitive advantage of saving material from the solar module and optimizing both the arrangement of the material and the use thereof in an optimal way. It further provides the advantage of assembly speed. The fixing (to the ground, to the roof, to the rooftop) can be carried out using any fastening system, enabling the panel to be positioned from the initial moment at a predetermined inclined angle.

## Claims

1. A self-supporting frame (1) for photovoltaic panels which comprise photovoltaic cells, the frame (1) being **characterized in that** it comprises:
- support structure (2) made up of profiles, for supporting the photovoltaic cells, and which comprises two lateral sides (6); and
- at least one reinforcement element (3), mounted in correspondence with the corresponding lateral side (6) thereof for supporting additional loads to the weight of the cells.

2. The self-supporting frame (1) according to claim 1, **characterized in that** at least one reinforcement element (3) is made up of one single part.

3. The self-supporting frame (1) according to claim 2, **characterized in that** the reinforcement element (3) made up of one single part constitutes a triangular gusset.

4. The self-supporting frame (1) according to claim 1, **characterized in that** at least one reinforcement element (3) comprises a longitudinal section (9), mounted along the corresponding lateral side (6), and an oblique section (10), articulated with the longitudinal section (9).

5. The self-supporting frame (1) according to any of claims 1-4, **characterized in that** it comprises two reinforcement elements (3), one on each of the lateral sides (6), for jointly withstanding the stresses of the panel.

6. The self-supporting frame (1) according to any of claims 1-4, **characterized in that** it comprises one single reinforcement element (3), located on only one of the two lateral sides (6), for withstanding part of the stresses of its own panel and part of the stresses of an adjacent panel.

7. The self-supporting frame (1) according to any of claims 1-6, **characterized in that** any reinforcement element (3) is detachable from the corresponding lateral side (6) thereof.

8. The self-supporting frame (1) according to any of claims 1-6, **characterized in that** at least one reinforcement element (3) is not detachable from the corresponding lateral side (6) thereof.

9. The self-supporting frame (1) according to any of claims 1-8, **characterized in that** at least one reinforcement element (3) is able to pivot with respect to the corresponding lateral side (6) thereof in a longitudinal direction of the corresponding lateral side (6).

10. The self-supporting frame (1) according to any of claims 1-8, **characterized in that** at least one reinforcement element (3) is fixed with respect to the corresponding lateral side (6) thereof.

11. The self-supporting frame (1) according to claim 8, **characterized in that** the reinforcement element (3) is solid, wherein the frame (1) is configured so that the lateral sides (6) are suspended from the reinforcement elements (3), for transferring the stresses in addition to the weight of the panels with the solar cells to the reinforcement elements (3).

12. The self-supporting frame (1) according to claim 11, **characterized in that** it additionally comprises:
- hooks (35), fixed on both sides of the reinforcement elements (3); and
- lateral profiles (36), mounted on the corresponding lateral side (6) thereof, and configured such that they fit into the hooks (35) so as to be suspended from said hooks (35) in a slidable manner.

13. The self-supporting frame (1) according to claim 12, **characterized in that** the hooks (35) are configured by way of C-shaped or inverted C-shaped lateral plates, as well as the lateral profiles (36) being configured to fit, with form closure, into the hooks (35).

14. The self-supporting frame (1) according to claim 13, **characterized in that** the lateral profiles (36) include:
- an upper cross section that develops in an enveloping shape in a direction (same or opposite) with respect to the clockwise direction, and
- a lower cross section that develops with an enveloping shape in the opposite direction to that of the upper cross section, creating a C-shaped or inverted C-shaped (" 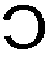 ") cavity, which enables the lateral side (6) - lateral profile (36) assembly to slide suspended from the hooks (35).

15. The self-supporting frame (1), according to any of claims 1-14, **characterized in that** it additionally comprises connection elements (4) for connecting the support structure (2), together with the reinforcement elements (3), to a torsion tube (5) belonging to a solar tracker intended for providing solar tracking to the photovoltaic panel.

16. The self-supporting frame (1), according to claim 15, **characterized in that** at least one connection element (4) comprises one connection body (11) intended for being fixed to the torsion tube (5) being passed through by said torsion tube (5), the connection body (11) comprising one or more upper grooves (19) and one or more lower grooves (20);
as well as the reinforcement element (3) comprises:
- an upper projection (12) for engaging in the corresponding upper groove (19) thereof; and
- a lower projection (21), to be connected in the corresponding lower groove (20) thereof by means of a through element (13) through perforations (14).

17. The self-supporting frame (1), according to claim 16, **characterized in that** the connection body (11) comprises only one upper groove (19) and only one lower groove (20), for fixing the reinforcement element (3) of one of the lateral sides (6) of a single panel.

18. The self-supporting frame (1), according to claim 16, **characterized in that** the connection body (11) comprises two upper grooves (19) and two lower grooves (20) intended for fixing the reinforcement element (3) of one of the lateral sides (6) of two adjacent panels.

19. The self-supporting frame (1), according to any of claims 16-18, **characterized in that** the connection body (11) comprises one or more upper grooves (19) and one or more additional lower grooves (20), for connecting opposite panels located on both sides of the torsion tube (5).

20. The self-supporting frame (1), according to any of claims 15-19, **characterized in that** at least one connection element (4) comprises an arched portion (15) integrated in the reinforcement element (3) itself, to partially clasp the torsion tube (5), and which in turn includes an upper section wherein a hook (22) and a groove (23) are located, for engaging the hook (22) of an arched portion (15) in the groove (23) of a facing panel.

21. The self-supporting frame (1), according to claim 20, **characterized in that** the arched portion (15) further includes a lower section (24), which extends until it reaches a vertical median plane of the torsion tube (5), and which in turn includes a folded plate (25) provided with a hole (26) to be fixed to an arched portion (15) of a facing panel.

22. The self-supporting frame (1), according to claim 20, **characterized in that** the arched portion (15) additionally includes a complementary arched portion (16), to press against the torsion tube (5), and which exhibits perforations (27) at the ends thereof to be superiorly screwed to the arched portion (15) and inferiorly to another complementary portion (16) of an opposite panel, to surround and tighten the torsion tube (5).

23. The self-supporting frame (1) according to any of claims 15-22, **characterized in that** the connection element (4) comprises projections (18) intended for positioning and supporting the reinforcement element (3) in corresponding perimeter grooves (17) made in the torsion tube (5); as well as the reinforcement element (3) is inferiorly configured to be fixed to the torsion tube (5) or to an auxiliary part fixed to the torsion tube (5).

24. The self-supporting frame, according to any of claims 1-14, **characterized in that** the connection element (4) comprises:
- two clamps (28, 29), with an internal shape adapted to the external shape of the torsion tube (5), for avoiding relative rotation between the reinforcement elements (3) and the torsion tube (5), wherein the clamps (28, 29) comprise:
- an upper clamp (28) mounted superiorly on the torsion tube (5), and
- a lower clamp (29), mounted inferiorly on the torsion tube (5), and opposite the upper clamp (28);
- one or more holes in the clamps (28, 29), for passing through the torsion tube (5);
- at least one bolt (30) housed in the corresponding hole thereof, and which passes through the clamps (28, 29); and
- corresponding nuts (31), at the ends of the bolt (30) or the bolts (30), to press the clamps (28, 29) against the torsion tube (5).

25. The self-supporting frame, according to claim 24, **characterized in that** the upper clamp (28) comprises in turn lateral grooves (33) wherein the reinforcement elements (3) fit.

26. The self-supporting frame (1), according to any of claims 15-25, **characterized in that** it is made of aluminium.

27. The self-supporting frame (1), according to any of claims 15-26, **characterized in that** it is made of steel.

28. The self-supporting frame (1), according to claim 27, **characterized in that** it is made of surface-coated steel.

29. The self-supporting frame (1), according to claim 28, **characterized in that** it is made of surface-coated steel with a zinc-aluminium-magnesium coating.

30. A photovoltaic solar installation **characterized in that** it comprises:
- at least one photovoltaic panel which comprises a plurality of cells mounted on the frame (1) described in any of claims 1-29; and
- a solar tracker, for providing solar tracking to the panel or to the panels, and which comprises a torsion tube (5), connected to the panel or the panels.
